# EUROPEAN PATENT APPLICATION

(11) **EP 3 269 259 A1**
(43) Date of publication of application: **17.01.2018**
(21) Application number: 16382332.1
(22) Date of filing: 13.07.2016
(51) Int. Cl.: A23P 20/20, A23P 30/20, A23P 30/00, A23P 20/25

(54) **COOKING ROBOT AND CARTRIDGE CONTAINING FOOD CONFIGURED FOR BEING USED IN SAID COOKING ROBOT**

(71) Applicant: Ingepyme Ingenieria y Consultoria, S.L., 20018 Donostia (ES)
(72) Inventor: MUÑOZ MARTIN, Jose Ignacio, 48970 BASAURI (ES)
(74) Representative: Igartua, Ismael

(57) **Abstract**

Cooking robot for cooking a food product (150) manufactured from foods (10) contained in cartridges (30) which are coupled to the cooking robot (300), comprising at least one extrusion device (40) for extruding foods (10) in order to place said foods (10) on at least one base (50) from different directions. The cooking robot (300) comprises at least one transfer circuit (60) for conveying the foods (10) from a cartridge (30) to the extrusion device (40), and a hydraulic circuit (70) for thermally treating the foods (10) in the cartridge (30) and along the at least one transfer circuit (60).

## Description

### TECHNICAL FIELD

The present invention relates to cooking robots for cooking food products manufactured from foods contained in cartridges which are coupled to the cooking robot, and cartridges containing food configured for being used with said cooking robots.

### PRIOR ART

Printers for food products manufactured with foods contained in cartridges, comprising extrusion or injection devices for extruding or injecting said foods, placing them in layers on a base from several directions, are known. The cartridges are conveyed from storage to a food product manufacturing area by means of conveyance tools. The foods are thermally adapted to a defined temperature before extrusion. This thermal preparation of the foods is performed inside the cartridge in the cartridge storage area, and the cartridge is then transferred to the extrusion device. In other cases, in addition to thermally preparing the food inside the cartridge in a zone separated from the extrusion zone, the food can also be thermally prepared inside the cartridge in the extrusion device itself.

WO2014/190168A1 describes a 3D food printer printing food products, with foods contained in cartridges which are coupled to the food printer. The printer comprises storage for cartridges, said cartridges comprising heating means thermally adapting the food contained therein to the desired temperature for manufacturing the food product. The cartridges are conveyed from storage to the food printing area by means of a conveyance tool, said conveyance tool comprising an extrusion device for extruding foods in order to place said foods on a base from different directions.

### DISCLOSURE OF THE INVENTION

The object of the invention is to provide a cooking robot for cooking food products manufactured from foods contained in cartridges which are coupled to the cooking robot, cartridges containing food configured for being used with said cooking robots, and a system comprising the cooking robot and at least one cartridge, as defined in the claims.

A first aspect of the invention relates to a cooking robot for cooking a food product manufactured from foods contained in cartridges which are coupled to the cooking robot, the cooking robot comprising at least one extrusion device for extruding foods in order to place said foods on at least one base from different directions. The cooking robot also comprises at least one transfer circuit for conveying the foods from a cartridge to the extrusion device, and a hydraulic circuit for thermally treating the foods in the cartridge and along the at least one transfer circuit.

In the cooking robot of the invention, the cartridges containing the foods are arranged in one area, and the extrusion device is arranged in another different area. To convey the food contained in each cartridge between both areas, the appliance of the invention comprises a transfer circuit which allows performing same in a continuous manner and without requiring specific conveyance tools conveying the cartridge from its storage area to the area where the extrusion device is arranged. Furthermore, and given that the food can lose the temperature required for the printing thereof, the cooking robot also comprises a hydraulic circuit thermally treating the food in a continuous manner to reach the desired temperature, in the cartridge itself and along the entire path from said cartridge to the extrusion device.

In this manner, the food is conveyed from the cartridge to the extrusion device in a continuous manner, without intermediate conveyance tools which generate longer food product manufacturing times, and cartridges having much greater capacity for containing foods, providing more autonomy when cooking the food products, and reducing the total costs of cooking said food products, can be used.

A second aspect of the invention relates to a cartridge containing food configured for being used with a cooking robot according to the first aspect of the invention, and a third aspect relates to a system formed by the cooking robot and at least one cartridge.

These and other advantages and features of the invention will become evident in view of the drawings and the detailed description of the invention.

### DESCRIPTION OF THE DRAWINGS

Figure 1 shows a general schematic view of an embodiment of the cooking robot of the invention.
Figure 2 shows a cross-section view of the main circuit of the hydraulic circuit and of the transfer conduit of the transfer circuit of the cooking robot, according to line II-II of Figure 1.
Figure 3 shows a schematic view of the multiple connector of the hydraulic circuit and of the transfer circuit connected to the cartridge of the cooking robot of Figure 1.
Figure 4 shows a cross-section view of the cartridge connected to the multiple connector of Figure 3.

### DETAILED DISCLOSURE OF THE INVENTION

3D printers for food products print the foods contained in cartridges at temperatures suitable for the printing and presentation thereof, taking into account the temperature suitable for each food. The cooking robot 300 of the invention also performs 3D printing of the foods contained in cartridges 30, i.e., from several directions, but it complements said printing by cooking the food product configured with the printed foods. Like in a conventional cooking, this cooking involves subjecting the foods placed thereon after printing to different temperatures for predetermined times.

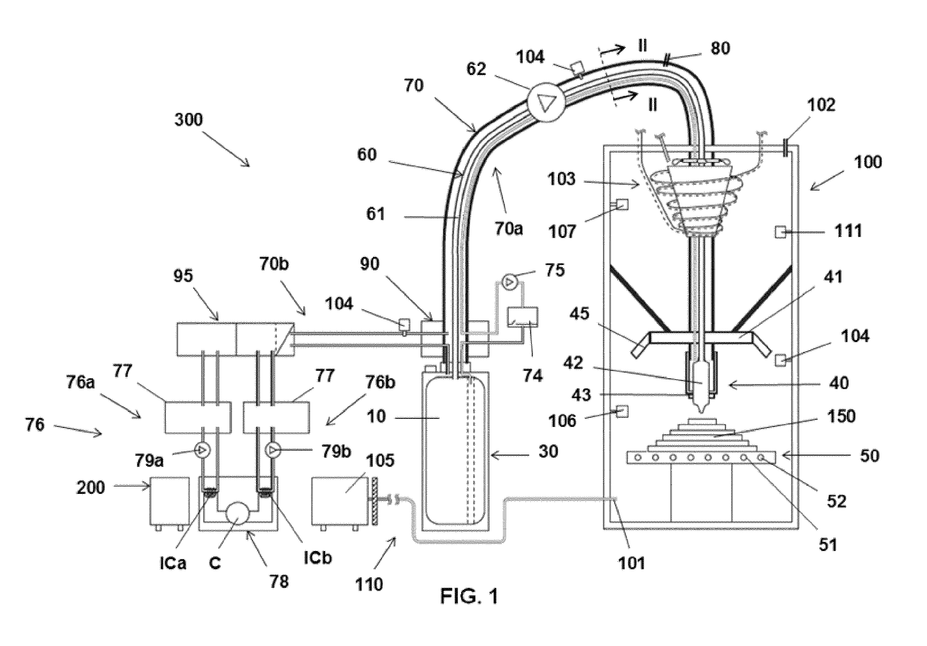

A first aspect of the invention relates to a cooking robot 300 for cooking a food product 150 manufactured from foods 10 contained in cartridges 30 which are coupled to the cooking robot 300. Figure 1 shows a general schematic elevational view of an embodiment of the cooking robot 300 of the invention. The food products 150 are any fluid recipe which, through a cooking process, solidifies and is presented for consumption. In this embodiment of the cooking robot 300, a food product 150 which is a mussel shell is defined as an example. The food 10 required for preparing the mussel shell is egg white, squid ink and marine plankton, which are mixed inside a single cartridge 30. In the preparation of other food products 150, different foods 10 which will be arranged in more than one cartridge 30 may be necessary, but the configuration and operation of the cooking robot 300 for the preparation thereof is basically the same, as will be seen below.

In this embodiment, the cooking robot 300 comprises an extrusion device 40 for extruding foods 10 in order to print and place said foods 10 on a base 50 from different directions. This cooking robot 300 also comprises a transfer circuit 60 for conveying the food 10 from the cartridge 30 to the extrusion device 40, and a hydraulic circuit 70 which allows thermally treating the food 10 in the cartridge 30 and along the transfer circuit 60 until the extrusion device 40. The cooking robot 300 comprises a control unit 200 for controlling the manufacturing and cooking of the food product 150 in all its phases, controlling parameters of the different elements configuring said cooking robot 300.

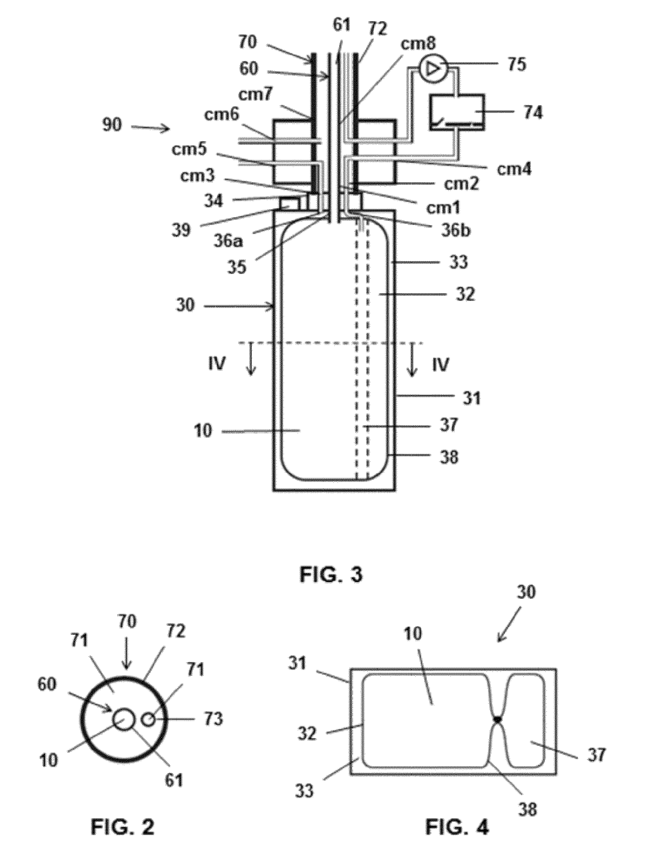

Figure 2 shows a cross-section view of the main circuit of the hydraulic circuit 70, and of the transfer conduit 61 of the transfer circuit 60 of the cooking robot 300, according to line II-II of Figure 1.

In this embodiment, the transfer circuit 60 comprises a transfer conduit 61 which allows the circulation of the food 10, being fluidically communicated with the cartridge 30 in which said food 10 is placed, and the extrusion device 40 in which the food 10 is printed, as will be described below. This transfer conduit 61 is manufactured with a flexible food-grade material. The transfer circuit 60 also comprises drive means 62 for driving the food 10 along the transfer conduit 61 and metering it to the extrusion device 40. In this embodiment, these drive means are a peristaltic pump which is a type of positive-displacement hydraulic pump used for pumping the food 10. The food 10 is contained inside the flexible transfer conduit 61 which is fitted into the pump, said pump having rollers or shoes compressing said transfer conduit 61, driving the food 10 without contaminating it.

The hydraulic circuit 70 in turn comprises a heat transfer fluid 71 which in this embodiment is water with glycol, and which in other embodiments can be a food-grade heat transfer oil which allows performing heat transfer. The heat transfer fluid 71 circulates along the outside of the transfer conduit 61 of the transfer circuit 60, inside a jacket 72 enveloping said transfer conduit 61 to perform heat transfer. The hydraulic circuit 70 comprises a main circuit 70a in which the heat transfer fluid 71 flows along the outside of the transfer conduit 61 inside the jacket 72, and a peripheral circuit 70b which allows connecting the main circuit 70a with storage and recirculation means for storing and recirculating the heat transfer fluid 71, that will be described below.

The heat transfer fluid 71 reaches the extrusion device 40 through the main circuit 70a through the inside of the jacket 72, surrounding the transfer conduit 60 for transferring the food 10, and returns to the converging point with the peripheral circuit 70b through a return conduit 73. The jacket 72 and the return conduit 73 are manufactured from silicone, but they can be manufactured with other materials.

The hydraulic circuit 70 comprises drive means 75 which allow driving the heat transfer fluid 71, in this embodiment of the cooking robot 300 the drive means 75 being a hydraulic pump connected to the return conduit 73 of the hydraulic circuit 70, at a point located close to the cartridge 30. Furthermore, the hydraulic circuit 70 comprises pressure variation means 74 for varying the pressure of the heat transfer fluid 71, which are arranged in fluid communication with the hydraulic circuit 70 and close to the drive means 75. In this embodiment of the cooking robot 300, these pressure variation means 74 are pressure-controlled valves or pressure-relief orifice valves comprising an inlet for the heat transfer fluid 71, and for example, two outlets which are two openings of 1 and 2 millimeters in diameter, respectively, which allows performing regulation increasing the pressure of the fluid by reducing the flow rate, said outlets being able to be combined. In fact, the outlets can be different in other embodiments.

The hydraulic circuit 70 comprises in the peripheral circuit storage means 76 for storing the heat transfer fluid 71. In this embodiment of the cooking robot 300, these storage means 76 are divided into storage means 76a for storing hot heat transfer fluid 71, and storage means 76b for storing cold heat transfer fluid 71, the temperature of the fluid in the storage means 76a being able to be, for example, between 50 and 60°C, and the temperature of the fluid in the storage means 76b being able to be, for example, between 5 and 10°C. In this embodiment of the cooking robot 300, these storage means 76 are closed receptacles 77 manufactured from lacquered sheet, with a closure membrane which allows varying the volume without increasing the pressure of the heat transfer fluid 71. Receptacles 77 open to the atmosphere could also be used.

The storage means 76 also comprise heat exchange means 78 which allow heating or cooling the heat transfer fluid 71. In this embodiment of the cooking robot 300, the heat exchange means 78 comprise a HFC gas-fed compressor C comprising two outlets, an outbound/inbound outlet leading to/returning from a heat exchanger ICa which allows heat transfer with an outlet of the storage means 76a for storing hot heat transfer fluid 71, and an outbound/inbound outlet leading to/returning from a heat exchanger ICb which allows heat transfer with an outlet of the storage means 76b for storing cold heat transfer fluid 71. The storage means 76 comprise for each of the storage means 76a for storing hot heat transfer fluid 71, and the storage means 76b for storing cold heat transfer fluid 71, recirculation means 79a and 79b which allow driving the heat transfer fluid 71 between said storage means 76a and 76b, through the outlets of said storage means 76a and 76b to the heat transfer zone in the respective heat exchangers ICa and ICb.

The hydraulic circuit 70 also comprises an air valve 80 connected, in this embodiment of the cooking robot 300, with the inside of the jacket 72 in the drive circuit for driving the heat transfer fluid 71 to the extrusion device 40, at the highest point of said circuit. This valve 80 allows introducing air in the hydraulic circuit 70 and, in collaboration with the drive means 75, extracting the heat transfer fluid 71 from the hydraulic circuit 70. This can be useful for example when the food product 150 to be cooked is changed, and there is a need to change the cartridges 30.

Figure 3 shows a schematic view of a multiple connector 90 of the hydraulic circuit 70 and of the transfer circuit 60 connected to the cartridge 30 of the cooking robot 300 of Figure 1. As mentioned above, the hydraulic circuit 70 comprises a main circuit 70a and a peripheral circuit 70b which are in fluid communication. To carry out said communication, the hydraulic circuit 70 comprises a multiple connector 90 for connecting the jacket 72 of the hydraulic circuit 70, enveloping the transfer conduit 61 of the transfer circuit 60, the cartridge 30, both in the main circuit 70a, and the storage means 76 for storing the heat transfer fluid 71, arranged in the peripheral circuit 70b. This connector is a prismatic part which, in this embodiment of the cooking robot 300, is a machined metal part, comprising several communication paths. The multiple connector 90 is arranged at the outlet of each cartridge 30 and comprises on the side of the cartridge 30 an entry path cm1 for the entry of the food 10, an exit path cm2 for the exit of the heat transfer fluid 71 coming from the return conduit 73, and an entry path cm3 for the entry of the heat transfer fluid 71 which is directed towards the storage means 76. On one side, said multiple connector 90 comprises an entry path cm4 for the entry of the heat transfer fluid 71 coming from the pressure variation means 74, arranged close to the drive means 75, and internally connects with the exit path cm2. On another side, the multiple connector 90 comprises an exit path cm5, internally connected with the entry path cm3 for the entry of the heat transfer fluid 71, and is directed towards the storage means 76, and an entry path cm6, coming from the storage means 76. Finally, on another side of the multiple connector 90, opposite the side of the cartridge 30, it comprises an exit path cm7, internally connected with the entry path cm6, which allows directing the heat transfer fluid 71 to the inside of the jacket 72 of the hydraulic circuit 70, and an exit path cm8, internally connected with the entry path cm1, which allows directing the food 10 to the transfer conduit 61.

The hydraulic circuit 70 comprises between the storage means 76 and the multiple connector 90 a selector valve 95 which allows the entry and reception of the heat transfer fluid 71 to/from the main circuit 70a of the hydraulic circuit 70, through the multiple connector 90, in order to maintain said fluid in the thermal conditions defined for the preparation of the food product 150. This selector valve 95 comprises an outlet connecting with the entry path cm6 of the multiple connector 90, and an inlet connecting with the exit path cm5 of said multiple connector 90. On the other hand, the selector valve 95 comprises an entry path and an exit path which are fluidically connected with the storage means 76a for storing hot heat transfer fluid 71, and an entry path and an exit path which are fluidically connected with the storage means 76b for storing cold heat transfer fluid 71. The selector valve 95 therefore receives hot and cold heat transfer fluid 71 from the storage means 76, and supplies in a compensated manner to the main circuit 70a heat transfer fluid 71 at the temperature that is suitable for treating the food 10 until the extrusion device 40. Similarly, the selector valve 95 receives heat transfer fluid 71 which has lost the required thermal conditions, and allows the passage of said heat transfer fluid to the storage means 76, the requirement that the flow rate of the heat transfer fluid 71 leaving the selector valve 95 to the main circuit 70a must be the same as the flow rate entering from said main circuit 70a being complied with.

The storage means 76 are located in a compartment which is named Factory.

The cooking robot 300 comprises a closed extrusion compartment 100, other than The Factory, on the inside of which there are arranged the extrusion device 40 and the base 50 where the food 10 printed by the extrusion device 40 is placed. The jacket 72 of the hydraulic circuit 70, inside which the transfer conduit 61 of the transfer circuit 60 runs, is connected through the upper portion of the compartment 100 with the extrusion device 40. This extrusion device 40 comprises a support 41, which in this embodiment is a circular disc, the jacket 72 being connected on one side of said support 41, going through said support 41. The hydraulic circuit 70 only has the outlet provided thereto by the return conduit 73, which allows returning the heat transfer fluid 71 to the cartridge 30. The transfer conduit 61 goes through the support 41 and is connected on the other side with an extrusion nozzle 42, thereby allowing the extrusion device 40, when it receives suitable instructions, to extrude and place layers of said food 10 on the base 50 arranged below the extrusion device 40.

The support 41 comprises, around the extrusion nozzle 42, thermal treatment means 43 which allow heating the food 10 in the extrusion nozzle 42 for extrusion. In this embodiment, the support 41 is attached to an actuator by means of three arms which, upon receiving suitable instructions, moves the support 41, and therefore the extrusion nozzle 42, in different directions with respect to the base 50. The assembly consisting of the actuator and the arms holding and moving the support 41 is, for example, a DELTA 3D motion system, using polar coordinates.

The compartment 100 comprises, in addition to a door (not shown in the drawings) for removing the cooked food product 150, an inlet 101 and an outlet 102. The cooking robot 300 comprises a pneumatic circuit 110 for pressurizing the inside of the compartment 100 with a gas at a specific pressure. In this embodiment, this pneumatic circuit 110 comprises a receptacle 105 arranged in The Factory comprising a compressed air compressor with a molecular membrane, which allows compressed air or nitrogen to exit at a specific pressure, or can comprise other containers pressurized with other gases, the receptacle 105 being fluidically connected to the inlet 101 of the compartment 100. On the other hand, in this embodiment the outlet 102 of the compartment 100 is a pressure control valve, tared at a specific pressure, such that when said pressure is exceeded inside the compartment 100, the valve opens, allowing part of the gas inside same to leave to the outside, until the defined inner pressure is recovered. The outlet 102 can also be an electrically controlled gate linked to one or more pressure sensors 111, which performs the same function as the pressure control valve. An atmosphere consisting of a gas, for example, air or nitrogen at a specific pressure, can thus be generated inside the compartment 100, this controlled atmosphere allowing cooking in any part of the world and at any altitude, in the same conditions as the sea level, for example.

The compartment 100 also comprises one or more oxygen concentration sensors 106 inside said compartment 100. By measuring the oxygen concentration inside the compartment 100, if it is of interest to reduce said concentration to delay the oxidation of the cooked food product 150, for example, nitrogen can be introduced through the inlet 101, thereby partially displacing the oxygen therein to the outlet 102 of the compartment 100.

The compartment 100 also comprises an air exchanger 103 which furthermore allows generating moisture inside said compartment 100 to aid in cooking specific food products 150. In this embodiment of the cooking robot 300, the air exchanger 103 comprises two cone-shaped coiled tubes, connected with the heat exchange means 78 arranged in The Factory, one of the tubes being connected with the heat exchanger ICa for the hot circuit, and the other tube being connected with the heat exchanger ICb for the cold circuit. The air exchanger 103 has incorporated therein a fan, and there is connected towards the inside thereof one or more nozzles which can spray water to generate moisture, said nozzles being connected to the external water network. In this manner, and when the recipe of the food product 150 so requires, moisture can be generated inside the compartment 100, said moisture being controlled with one or more moisture sensors 107 arranged inside the compartment 100.

As described above, the food 10 coming from the cartridges 30 to the extrusion device 40 arranged inside the compartment 100 must be thermally controlled, and to that end, the hydraulic circuit 70 and the storage means 76 through which the heat transfer fluid 71 which allows thermally treating said food 10 runs, have been described. For this purpose, the cooking robot 300 comprises in this embodiment a plurality of temperature sensors 104 arranged in the receptacles 77 of the storage means 76, in the hydraulic circuit 70 close to the multiple connector 90 and the cartridge 30, and inside the compartment 100 in the support 41 of the extrusion device 40, and close to the extrusion nozzle 42.

The base 50 is supported at the bottom of the compartment 100 below the extrusion device 40. This base 50 comprises heating means 51 and cooling means 52 for heating and cooling the food 10 placed on said base 50. The base 50 is configured as a coiled tube arranged inside a support, comprising therein the heating means 51 for heating by induction or conduction, also being able to be converted into cooling means 52.

The extrusion device 40 also comprises heating means 45 for heating the food 10 from the upper portion thereof when it is placed in layers on the base 50. In this embodiment of the cooking robot 300, these heating means 45 comprise an infrared radiation source which is arranged in the support 41 like a ring on the edge thereof, but it can also be arranged in the lower portion of said support 41. In this manner, while the support 41 moves in different directions, and the food 10 is placed in layers, the heating means 45 heat up said food 10 from different directions.

As described above, this embodiment of the cooking robot 300 comprises a cartridge 30 and comprises accordingly a transfer circuit 60 connecting the cartridge 30 with the extrusion device 40 arranged in the compartment 100, and a hydraulic circuit 70 with all the means it comprises, including the storage means 76. If the recipe of the food product 150 to be cooked so requires, the cooking robot 300 can use more cartridges 30. In said cases, the cooking robot 300 comprises per cartridge 30 a transfer circuit 60 and a hydraulic circuit 70, and comprises a single compartment 100, the different hydraulic circuits 70 being able to share the storage means 76 and the means comprised in said storage means 76. When more than one cartridge 30 is used, there will be only one support 41 of the extrusion device 40, but the different transfer circuits 60 and hydraulic circuits 70 converge to said support 41. Each transfer conduit 61 is attached to a different extrusion nozzle 42, but when the foods 10 are placed in layers on the base 50 it is not done at the same time, but rather every time a food 10 is extruded.

A second aspect of the invention relates to the cartridge 10 containing foods that is configured for being used with a cooking robot 300 as described above. Figure 4 shows a cross-section view of the cartridge 30 connected to the multiple connector 90 of Figure 3, arranged in this embodiment of the cooking robot 300 between The Factory and the extrusion compartment 100. The cartridge 30 comprises an outer container 31 having rigid walls made of steel or plastic, for example, and a deformable container 32, arranged inside the outer container 31, containing the food 10, manufactured from polyethylene, for example. The food 10 which is inside the deformable container 32 must be adapted to the temperature suitable for being supplied to the extrusion device 40, and must furthermore be extracted from the inside thereof to be transferred to the transfer conduit 61.

To perform both functions, an intermediate chamber 33 is demarcated between both the outer container 31 and deformable container 32, such that when the cartridge 30 is fluidically connected to the cooking robot 300, being connected to the transfer circuit 60 and to the hydraulic circuit 70 through the multiple connector 90, the deformable container 32 is communicated with the transfer conduit 60, and the intermediate chamber 33 is communicated with the hydraulic circuit 70. To make the connection, the cartridge 30 comprises a mouth or cap 34 with an opening 35 which is communicated with the inside of the deformable container 32, and two openings which are communicated with the intermediate chamber 33, an outlet opening 36a for exit from the cartridge 30, and an inlet opening 36b for entry into the cartridge 30. In this embodiment of the cartridge 30 of the invention, the opening 35 is communicated with the entry path cm1 for the entry of the food 10 of the multiple connector 90, the outlet opening 36a is communicated with the entry path cm3 for the entry of the heat transfer fluid 71 of the multiple connector 90, and the inlet opening 36b is communicated with the exit path cm2 for the exit of the heat transfer fluid 71 of the multiple connector 90.

To make it easier for and to get the heat transfer fluid 71 to flow in the intermediate chamber 33, running the longest possible route around the deformable container 32, said deformable container 32 comprises a channel 37 inside said container 32 arranged on the outer surface 38 thereof. The heat transfer fluid 71 is thereby forced to be introduced in the intermediate chamber 33 from the inlet opening 36b towards the mouth of the channel 37, runs through said channel 37 to the bottom of the outer container 31, and when said fluid leaves the channel 37 it searches for the outlet of the cartridge 30 offered by the outlet opening 36a. The heat transfer fluid 71 therefore surrounds the deformable container 32, thermally adapting the food 10 therein, and since said heat transfer fluid 71 is at a specific pressure defined with the pressure variation means 74, said heat transfer fluid 71 presses the deformable container 32, and the food 10 therein leaves through the opening 35 towards the entry path cm1 of the multiple connector 90. The heat transfer fluid therefore performs a dual function: on one hand it thermally treats the food 10 and on the other hand it presses the deformable container 32 for driving said food 10.

The cartridge 30 also comprises an electronic identification tag 39 with information about the food 10 contained in the cartridge 30. This information contained in the identification tag 39 comprises, in addition to information about the traceability of the food 10 in terms of its origin, packaging and expiration date, and data concerning the manufacturer and the production of said food 10, information about the temperatures to which the food 10 has been subjected throughout the entire time it was inside the cartridge 30, from the time it is packaged, transported and stored, to the time it will be used by the user for cooking the food product 150. This provides a high level of food safety, because the temperature condition in the foods is known, such that if any of the temperatures recorded by the identification tag 39 exceeds any of the limits established for the food 10, the cooking robot 300 is capable of rejecting said cartridge 30 with the food 10 contained therein.

To be able to perform all the functions described above and to control them, the cooking robot 300 comprises a control unit 200 arranged in The Factory. This control unit 200 is electronically communicated with the transfer circuit 60, with the hydraulic circuit 70, with the extrusion compartment 100, and with the defined sensors for controlling the temperature, pressure, moisture and oxygen concentration. The identification tag 39 further comprises information referring to recipes which allow cooking the food product 150, defining for each food 10 contained in each cartridge 30, the different parameters which allow thermally preparing it for transfer thereof from the cartridge 30 to the extrusion compartment 100, the parameters for actuating the actuator of the support 41 of the extrusion device 40, and the different parameters for cooking the food 10 placed in layers on the base 50, from the heating means 45, the heating means 51 and cooling means 52 of the base 50, and the pressure, moisture, temperature and oxygen concentration of the atmosphere inside the compartment 100.

## Claims

1. Cooking robot for cooking a food product (150) manufactured from foods (10) contained in cartridges (30) which are coupled to the cooking robot (300), comprising at least one extrusion device (40) for extruding foods (10) in order to place said foods (10) on at least one base (50) from different directions, **characterized in that** it comprises at least one transfer circuit (60) for conveying the foods (10) from a cartridge (30) to the extrusion device (40), and a hydraulic circuit (70) for thermally treating the foods (10) in the cartridge (30) and along the at least one transfer circuit (60).

2. Cooking robot according to claim 1, wherein the transfer circuit (60) comprises a transfer conduit (61) and drive means (62) for driving the food (10) along said transfer conduit (61).

3. Cooking robot according to claim 2, wherein the drive means (62) of the transfer circuit (60) comprise a peristaltic pump.

4. Cooking robot according to claim 2 or 3, wherein the hydraulic circuit (70) comprises a heat transfer fluid (71) circulating along the outside of the transfer conduit (61) inside a jacket (72) enveloping said transfer conduit (61).

5. Cooking robot according to claim 4, wherein the heat transfer fluid (71) reaches the extrusion device (40) through the jacket (72) and returns through a return conduit (73).

6. Cooking robot according to claim 4 or 5, wherein the hydraulic circuit (70) comprises pressure variation means (74) of the heat transfer fluid (71).

7. Cooking robot according to any of claims 4 to 6, wherein the hydraulic circuit (70) comprises storage means (76) for storing the heat transfer fluid (71), said storage means (76) comprising heat exchange means (78) which allow heating or cooling the heat transfer fluid (71) of the storage means (76).

8. Cooking robot according to claim 7, wherein the hydraulic circuit (70) comprises a multiple connector (90) for connecting the jacket (72) enveloping the transfer circuit (60), the cartridge (30), and the storage means (76) for storing the heat transfer fluid (71).

9. Cooking robot according to any of claims 1 to 8, wherein the base (50) comprises heating means (51) and/or cooling means (52) for heating and/or cooling the food (10) placed on said base (50), said heating means (51) preferably comprising induction means, and said cooling means (52) preferably comprising an exchanger with coolant.

10. Cooking robot according to any of claims 1 to 9, comprising a closed compartment (100) on the inside of which the extrusion device (40) and the base (50) are arranged, the appliance (300) comprising a pneumatic circuit (110) for pressurizing the inside of the compartment (100) with a gas at a specific pressure, the compartment (100) comprising an inlet (101), connecting with the pneumatic circuit (110), and an outlet (102), an air exchanger (103) which allows generating moisture inside said compartment (100), and a plurality of pressure, temperature, moisture and oxygen concentration sensors (111, 104, 107, 106) for controlling the atmosphere inside the compartment (100).

11. Cartridge containing food, **characterized in that** it is configured for being used with an cooking robot (300) according to any of the preceding claims, and comprises an outer container (31) having rigid walls and a deformable container (32) arranged inside the outer container (31) containing the food (10), both containers (31, 32) demarcating an intermediate chamber (33), such that when the cartridge (30) is coupled to the cooking robot (300), the deformable container (32) is communicated with the transfer circuit (60) of the appliance (300), and the intermediate chamber (33) is communicated with the hydraulic circuit (70) of the appliance (300), the food (10) being thermally treated in the deformable container (32) by means of the heat transfer fluid (71), and said heat transfer fluid (71) driving said food (10) by exerting pressure on said deformable container (32).

12. Cartridge containing food according to claim 11, comprising a mouth (34) with an opening (35) communicated with the deformable container (32) and at least one opening (36) communicated with the intermediate chamber (33).

13. Cartridge containing food according to claim 12, wherein the at least one opening (36) communicated with the intermediate chamber (33) is communicated with said intermediate chamber (33) through at least one channel (37) arranged on the outer surface (38) of the deformable container (32).

14. Cartridge containing food according to any of claims 11 to 13, comprising an electronic identification tag (39) with information about the food (10) contained in the cartridge (30), including information about the temperatures to which the food (10) has been subjected.

15. System for cooking a food product (150), **characterized in that** it comprises an cooking robot (300) according to any of claims 1 to 10, and at least one cartridge (30) containing food (10) according to any of claims 11 to 14 connected to said cooking robot (300).
